# FASCICULE DE BREVET EUROPEEN

(11) **EP 2 027 518 B1**
(45) Date de publication et mention de la délivrance du brevet: **02.09.2009**
(21) Numéro de dépôt: 07788845.1
(22) Date de dépôt: 07.06.2007
(51) Int. Cl.: G05D 1/06, B64C 13/18

(54) **PROCEDE DE PILOTAGE D'UN AERONEF EN PHASE D'APPROCHE**
VERFAHREN ZUR STEUERUNG EINES FLUGZEUGES IM LANDEANFLUG
METHOD FOR PILOTING AN AIRCRAFT IN APPROACH PHASE

(30) Priorité: 13.06.2006 FR 0605237
(43) Date de publication de la demande: 25.02.2009
(73) Titulaire: AIRBUS France, 31060 Toulouse (FR); Airbus Deutschland GmbH, 21129 Hamburg (DE)
(72) Inventeur: DELAPLACE, Franck, F-31300 Toulouse (FR); RICHTER, Martin, 28717 Breme (DE); LANG, Dieter, 28816 Stuhr (DE)
(74) Mandataire: Bonnetat, Christian
(86) Numéro de dépôt international: PCT/FR2007/000940
(87) Numéro de publication internationale: WO 2007/144485

(56) Documents cités:
- EP-A1- 1 498 794
- FR-A1- 2 817 535

## Description

La présente invention concerne le pilotage d'un aéronef, notamment un aéronef de transport civil, dans une phase d'atterrissage dans laquelle ledit aéronef se déplace sur un palier d'approche en perdant de la vitesse avant d'aborder la descente finale vers une piste d'atterrissage. L'invention concerne plus spécialement les aéronefs dont les ailes sont pourvues de becs hypersustentateurs de bord d'attaque et de volets hypersustentateurs de bord de fuite, chacun desdits becs et volets étant commandable pour pouvoir prendre soit une position rétractée, soit au moins une position déployée.

On sait que, avant d'aborder un tel palier d'approche, les ailes de l'aéronef présentent une configuration lisse, non hypersustentée, pour laquelle lesdits becs et lesdits volets sont rétractés. Ensuite, lorsque l'aéronef aborde ledit palier d'approche et lorsque sa vitesse passe sous une première valeur prédéterminée, le pilote peut, par action sur le levier de commande des becs et des volets, conférer aux ailes une première configuration, très faiblement hypersustentée, pour laquelle lesdits becs sont moyennement déployés et inclinés, alors que lesdits volets restent rétractés. Puis, lorsque la vitesse de l'aéronef, qui suit ledit palier d'approche, passe sous une deuxième valeur prédéterminée, inférieure à la première, les ailes prennent une deuxième configuration, moyennement hypersustentée, pour laquelle lesdits becs sont moyennement déployés et inclinés, comme dans ladite première configuration, et lesdits volets sont moyennement déployés et inclinés. EP 11 498 794 divulgue un tel système.

Ainsi, sur ledit palier d'approche, on procède d'abord à un déploiement modéré desdits becs, puis à un déploiement modéré desdits volets. Il en résulte que la durée globale du passage de la configuration lisse à ladite deuxième configuration est au moins égale à la somme de la durée du déploiement des becs et de la durée du déploiement des volets.

Si le déploiement des becs et le déploiement des volets sont lents, il faut prévoir un palier d'approche long, ce qui peut être gênant en ce qui concerne le trafic aérien.

Au contraire, si le déploiement des becs et le déploiement des volets sont rapides, le palier d'approche peut être plus court, mais cela exige, pour lesdits becs et volets, des moyens d'actionnement hydrauliques et/ou électriques très puissants, volumineux et lourds.

L'objet de la présente invention est d'accélérer le passage de la configuration lisse à ladite deuxième configuration, sans utilisation de moyens d'actionnement surpuissants, volumineux et lourds pour lesdits becs et volets.

A cette fin, selon la présente invention, le procédé pour le pilotage d'un aéronef se déplaçant sur un palier d'approche en perdant de la vitesse avant d'aborder la descente finale vers une piste d'atterrissage, les ailes dudit aéronef étant pourvues de becs hypersustentateurs de bord d'attaque et de volets hypersustentateurs de bord de fuite, lesdits becs et volets étant commandables par un levier de commande pour conférer notamment auxdites ailes :
- avant que ledit aéronef aborde ledit palier d'approche, une configuration lisse, non hypersustentée, pour laquelle lesdits becs et lesdits volets sont rétractés ;
- lorsque ledit aéronef aborde ledit palier d'approche et lorsque sa vitesse passe sous une première valeur prédéterminée, une première configuration, très faiblement hypersustentée, pour laquelle lesdits becs sont moyennement déployés et inclinés, alors que lesdits volets restent rétractés ; et
- lorsque ledit aéronef suit ledit palier d'approche et lorsque sa vitesse passe sous une deuxième valeur prédéterminée inférieure à ladite première valeur, une deuxième configuration, moyennement hypersustentée, pour laquelle lesdits becs sont moyennement déployés et inclinés, comme dans ladite première configuration, et lesdits volets sont moyennement déployés et inclinés,
est remarquable en ce que :
- on confère automatiquement auxdites ailes de l'aéronef, lorsque ledit levier de commande est dans une position correspondant à ladite première configuration et que ledit aéronef passe un premier seuil de vitesse supérieur à ladite deuxième valeur de vitesse, au moins une configuration intermédiaire faiblement hypersustentée pour laquelle lesdits becs sont moyennement déployés et inclinés, comme dans lesdites première et deuxième configurations, et les volets sont moins déployés que dans ladite deuxième configuration ; et
- lorsque lesdites ailes présentent ladite configuration intermédiaire et que la vitesse de l'aéronef augmente au lieu de baisser et passe un second seuil de vitesse supérieur audit premier seuil de vitesse, on procède automatiquement à la rétraction desdits volets pour que lesdites ailes repassent à ladite première configuration.

Ainsi, grâce à la présente invention, on procède au déploiement partiel des volets pendant le déploiement des becs, de sorte que le passage à la deuxième configuration est accéléré. Toutefois, dans le cas où la vitesse de l'aéronef augmenterait jusqu'à devenir supérieure audit second seuil, c'est ladite première configuration qui serait utilisée.

Avantageusement, ledit premier seuil de vitesse est voisin de ladite première valeur prédéterminée de vitesse ; de préférence, il est de plus supérieur à cette dernière.

Ledit second seuil, supérieur audit premier seuil, permet d'éviter des déploiements et rétractions alternés desdits volets dans le cas où la vitesse de l'aéronef oscillerait autour dudit premier seuil. Ce second seuil peut être égal au premier seuil augmenté de quelques kts.

Dans ladite configuration intermédiaire, les volets déployés peuvent ou non être- inclinés. S'ils sont inclinés, de préférence ils le sont -moins que dans ladite deuxième configuration.

Une telle configuration intermédiaire dans laquelle les volets sont déployés et inclinés peut correspondre à une configuration usuelle faiblement hypersustentée, utilisée dans certaines circonstances de décollage.

Les figures du dessin annexé feront bien comprendre comment l'invention peut être réalisée. Sur ces figures, des références identiques désignent des éléments semblables.

La figure 1 est une vue schématique en perspective du dessus d'un avion permettant la mise en oeuvre du procédé conforme à la présente invention.

La figure 2 illustre différentes configurations des ailes de l'avion de la figure 1.

La figure 3 illustre schématiquement une procédure d'atterrissage de l'avion de la figure 1.

Les figures 4 et 5 illustrent deux exemples de configuration intermédiaire d'atterrissage conformes à la présente invention.

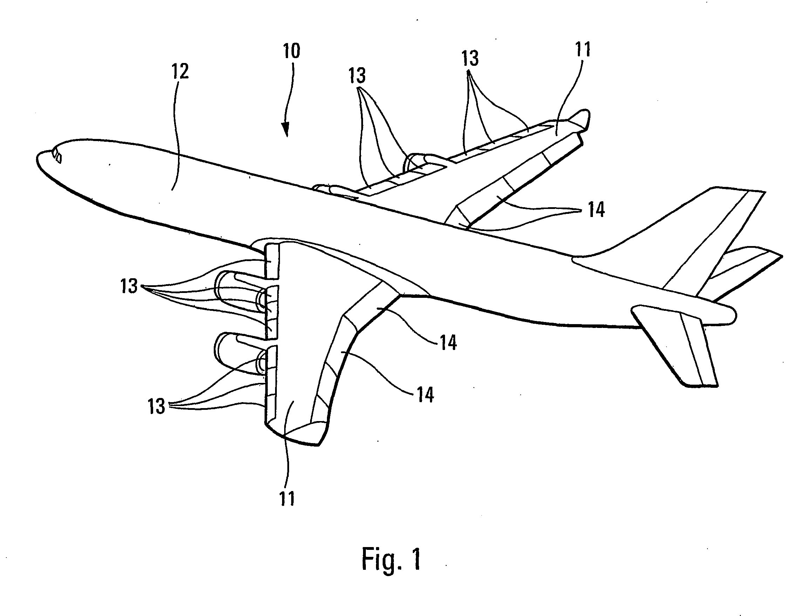

L'avion de transport civil 10 de type connu, représenté sur la figure 1, comporte deux ailes 11 disposées symétriquement par rapport au fuselage 12 dudit avion.

De façon également connue, lesdites ailes 11 sont pourvues, entre autres surfaces aérodynamiques de commande, de becs hypersustentateurs de bord d'attaque 13 et de volets hypersustentateurs de bord de fuite 14.

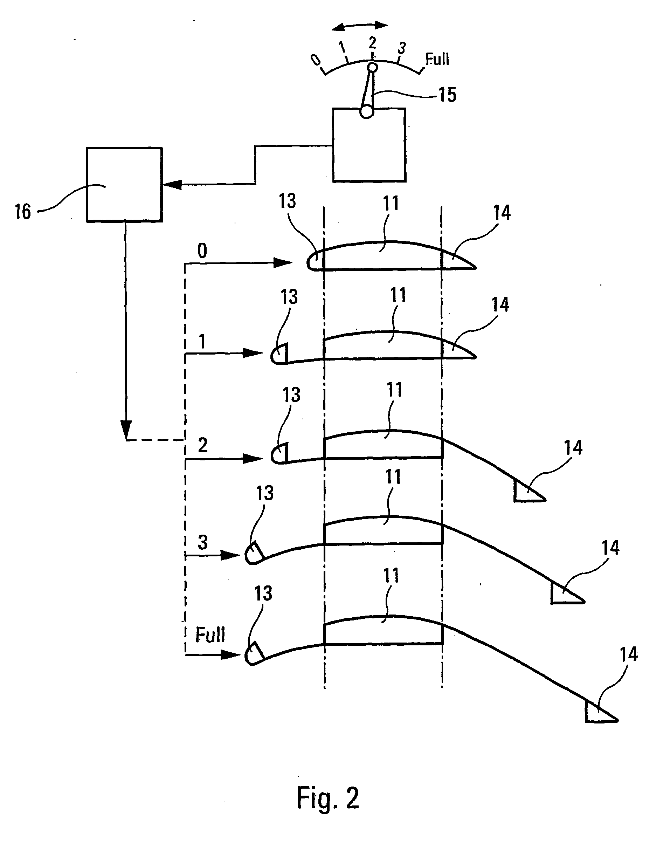

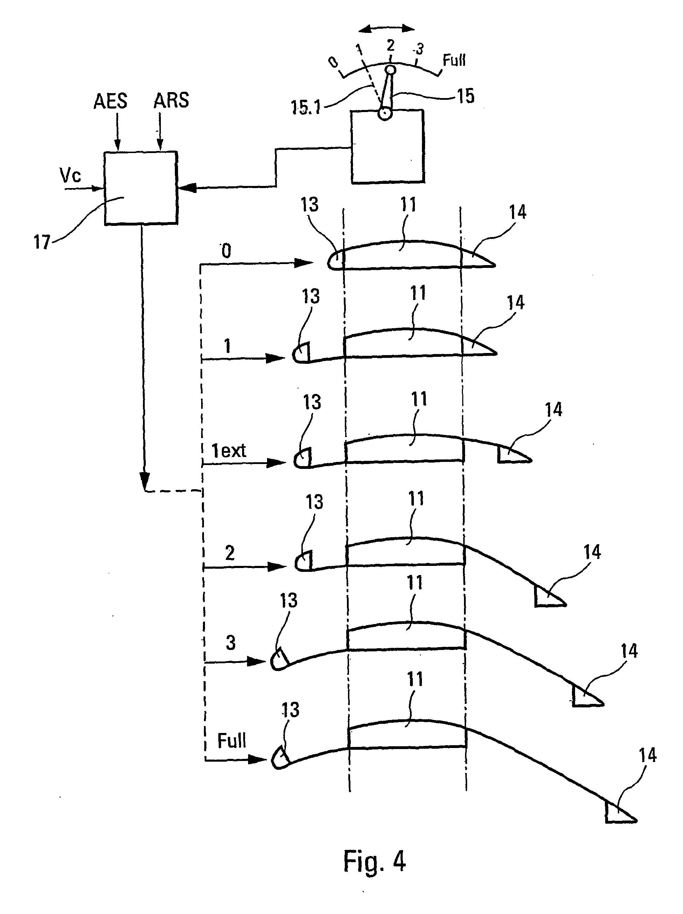

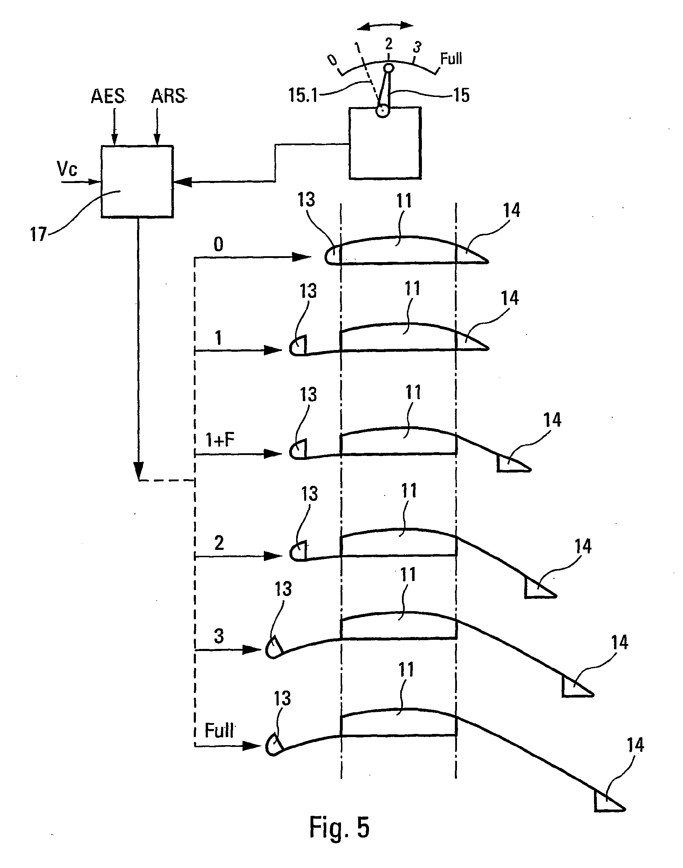

Les becs 13 et les volets 14 sont mobiles et commandables par action du pilote de l'avion 10 sur un levier 15 contrôlant des moyens de commande et d'actionnement 16 desdits becs et volets, comme cela est schématiquement représenté sur la figure 2. Cette dernière figure illustre également que, généralement, le levier 15 peut prendre cinq positions différentes, référencées respectivement 0, 1, 2, 3 et Full, correspondant à cinq configurations différentes de mêmes références. Ainsi, comme l'illustre la figure 2 :
- quand le levier 15 est en position 0, la configuration 0 correspondante des ailes 11 est lisse et non hypersustentée, les becs 13 et les volets 14 étant complètement rétractés, en formant une continuité aérodynamique avec lesdites ailes 11 ;
- quand le levier 15 est en position 1 (voir la position 15.1 sur les figures 4 et 5), la configuration 1 correspondante des ailes 11 est très faiblement hypersustentée, les becs 13 étant moyennement sortis en avant desdites ailes et inclinés par rapport à celles-ci, alors que les volets 14 sont complètement rétractés (comme en configuration O) ;
- quand le levier 15 est en position 2, la configuration 2 correspondante des ailes 11 est moyennement hypersustentée, les becs 13 étant moyennement sortis en avant desdites ailes et inclinés par rapport à celles-ci (comme en configuration 1), alors que les volets 14 sont également moyennement sortis en arrière desdites ailes et inclinés par rapport à celles-ci ;
- quand le levier 15 est en position 3, la configuration 3 correspondante des ailes 11 est très hypersustentée, les becs 13 étant complètement sortis en avant desdites ailes et inclinés par rapport à celles-ci, alors que les volets 14 sont très sortis en arrière desdites ailes, dans une position plus saillante et plus inclinée que dans la position moyennement sortie de la configuration 2 ; et
- quand le levier 15 est en position Full, la configuration Full correspondante des ailes 11 est complètement hypersustentée, les becs 13 étant complètement sortis en avant desdites ailes et inclinés par rapport à celles-ci (comme en configuration 3), alors que les volets 14 sont complètement sortis en arrière desdites ailes 11, dans une position plus saillante et plus inclinée que dans la position très sortie de la configuration 3.

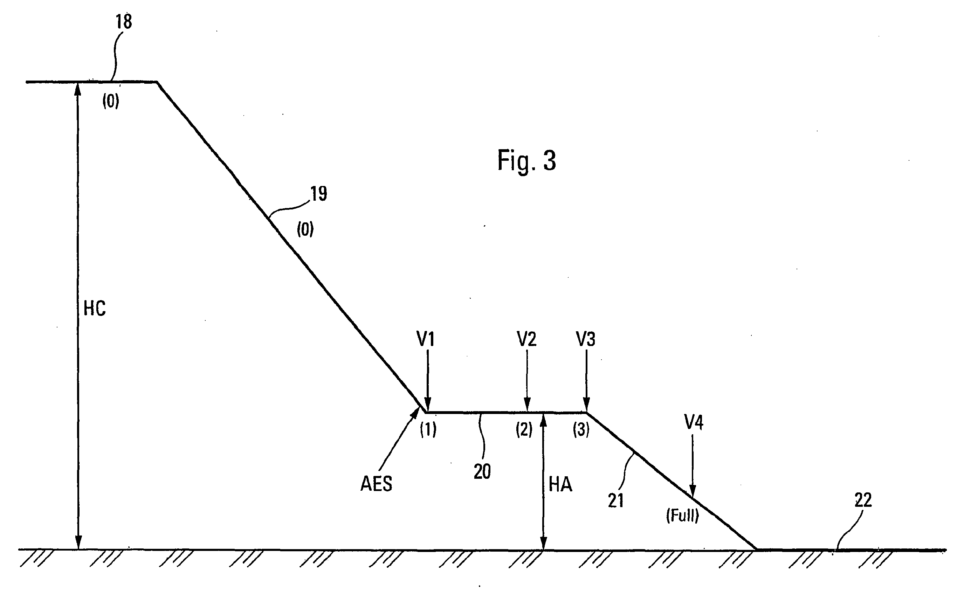

Sur la figure 3, on a illustré schématiquement l'utilisation usuelle des différentes configurations décrites ci-dessus lorsque l'avion 10 est en phase d'approche et d'atterrissage. Tant que l'avion 10 est sur sa trajectoire de croisière 18, à l'altitude de croisière HC, il est bien évident que la configuration des ailes 11 est la configuration lisse non hypersustentée 0. Lesdites ailes 11 conservent cette configuration lisse non hypersustentée 0 pendant que l'avion 10 suit sa trajectoire de descente 19 en direction du palier d'approche 20, tout en perdant de la vitesse.

En abordant le palier d'approche 20, le pilote actionne le levier 15 pour que les ailes 11 prennent la configuration 1 très faiblement hypersustentée, lorsque la vitesse de l'avion 10 atteint une première valeur prédéterminée V1. Puis, l'avion 10 continuant à perdre de la vitesse sur le palier d'approche 20 d'altitude HA, le pilote actionne ledit levier 15 pour que lesdites ailes 11 passent de la configuration 1 très faiblement hypersustentée à la configuration 2 moyennement hypersustentée, un tel passage ayant lieu à une deuxième vitesse prédéterminée V2, inférieure à V1.

Ensuite, les ailes 11 passent de la configuration 2 à la configuration 3, lorsque l'avion 10 aborde, à une troisième vitesse prédéterminée V3 inférieure à V2, la descente d'approche finale 21, puis, à une quatrième vitesse prédéterminée V4, inférieure à V3, le pilote commande le passage de la configuration 3 à la configuration Full pour atterrir sur la piste 22.

Ainsi, sur le palier d'approche 20, on constate que, dans un-premier temps, les becs 13 sont sortis pour passer de la position rétractée de la configuration 0 à la position moyennement sortie de la configuration 1, puis, dans un second temps, les volets 14 sont sortis pour passer de la position rétractée des configurations 0 et 1 à la position moyennement sortie de la configuration 2.

Il est bien évident que la sortie des becs 13 et la sortie des volets 14 ne sont pas instantanées, mais que, au contraire, la durée de chacune d'elles est de plusieurs dizaines de secondes, par exemple 40 secondes.

Il en résulte donc que le temps nécessaire pour passer de la configuration 0 au début du palier d'approche 20 à la configuration 2 à la fin de ce dernier correspond à la somme desdites durées, soit 80 secondes dans l'exemple précité.

Pour réduire ce temps, conformément à la présente invention et comme illustré par la figure 4 et par la figure 5, on prévoit entre les configurations 1 et 2, une configuration intermédiaire faiblement hypersustentée 1 ext ou 1 + F dans laquelle les becs 13 sont moyennement déployés et inclinés comme dans les configurations 1 et 2 et les volets 14 sont déployés, mais moins que dans la configuration 2.

Dans la configuration intermédiaire 1 ext de la figure 4, les volets 14 sont simplement déployés vers l'arrière, sans inclinaison. En revanche, dans la configuration intermédiaire 1 + F de la figure 5, les volets 14 sont déployés et inclinés. Cette configuration intermédiaire 1 + F peut correspondre à une configuration de décollage usuelle faiblement hypersustentée de l'avion 10.

Par ailleurs, sur les figures 4 et 5, les moyens de commande et d'actionnement de la figure 2 sont remplacés par des moyens de commande et d'actionnement 17, recevant la vitesse Vc de l'avion 10, ainsi que des seuils de vitesse AES et ARS. Le premier seuil AES est supérieur à la deuxième vitesse prédéterminée V2 et, de préférence, voisin de la première valeur prédéterminée V1 et, même légèrement supérieur à celle-ci. Le second seuil ARS est supérieur au premier seuil AES, de quelques kts.

Lorsque le levier 15 est amené en position 15.1 correspondant à la configuration 1 et lorsque la vitesse Vc de l'avion 10 devient égale puis inférieure au premier seuil AES, les moyens de commande et d'actionnement 17 commandent les becs 13 et les volets 14 pour que ceux-ci prennent la configuration intermédiaire 1 ext ou 1 + F. Si le premier seuil AES est supérieur à la première valeur prédéterminée V1, les becs 13 et les volets 14 prennent ladite configuration intermédiaire sans passer par la configuration 1. En revanche, si le premier seuil AES est inférieur à ladite première valeur prédéterminée V1, lesdits becs 13 et volets 14 sont d'abord commandés pour prendre la configuration 1, puis la configuration intermédiaire 1 ext ou 1 + F.

Ensuite, quand le pilote commande le levier 15 et l'amène dans la position correspondant à la configuration 2, les ailes 11 passent de la configuration intermédiaire 1ext ou 1 + F à la configuration 2.

Si, alors que les ailes 11 sont en configuration intermédiaire 1 ext ou 1 + F, la vitesse Vc de l'avion- 10 augmente (au lieu de continuer à diminuer) jusqu'au second seuil ARS, lesdits moyens de commande et d'actionnement 17 commandent lesdits volets 14 à la rétraction pour que lesdites ailes repassent en configuration 1.

De ce qui précède, on remarquera que, sous l'action des moyens 17 et alors que le levier 15 est en position 15.1, le passage de la configuration 0 ou de la configuration 1 à la configuration intermédiaire 1ext ou 1 + F et, inversement, l'éventuel passage de la configuration intermédiaire à la configuration 1 sont entièrement automatiques et ne peuvent constituer une charge de pilotage supplémentaire pour le pilote.

On remarquera de plus que, conformément à la présente invention, il est possible d'utiliser en commun -et non pas uniquement à titre de variantes- les deux configurations intermédiaires 1 ext et 1 + F. Par exemple, on peut prévoir que, le levier 15 étant amené en position 15.1, les ailes 11 passent, sous des conditions de vitesse décroissante, de la configuration 0 ou de la configuration 1 d'abord à la configuration intermédiaire 1 ext, puis à la configuration intermédiaire 1 + F.

## Revendications

1. Procédé pour le, pilotage d'un aéronef (10) se déplaçant sur un palier d'approche (20) en perdant de la vitesse avant d'aborder la descente finale (21) vers une piste d'atterrissage (22), les ailes (11) dudit aéronef (10) étant pourvues de becs hypersustentateurs de bord d'attaque (13) et de volets hypersustentateurs de bord de fuite (14), lesdits becs et volets étant commandables par un levier de commande (15) pour conférer notamment auxdites ailes :
- avant que ledit aéronef (10) aborde ledit palier d'approche (20), une configuration lisse (0), non hypersustentée, pour laquelle lesdits becs et lesdits volets sont rétractés ;
- lorsque ledit aéronef (10) aborde ledit palier d'approche (20) et lorsque sa vitesse (Vc) passe sous une première valeur prédéterminée (V1), au moins une première configuration (1), très faiblement hypersustentée, pour laquelle lesdits becs (13) sont moyennement déployés et inclinés, alors que lesdits volets (14) restent rétractés ; et
- lorsque ledit aéronef (10) suit ledit palier d'approche (20) et lorsque sa vitesse passe sous une deuxième valeur prédéterminée (V2) inférieure à ladite première valeur (V1), une deuxième configuration (2), moyennement hypersustentée, pour laquelle lesdits becs (13) sont moyennement déployés et inclinés, comme dans ladite première configuration (1), et lesdits volets (14) sont moyennement déployés et inclinés,
**caractérisé en ce que** :
- on confère automatiquement auxdites ailes (11) de l'aéronef (10), lorsque ledit levier de commande (15) est dans une position correspondant à ladite première configuration (1) et que ledit aéronef passe un premier seuil de vitesse (AES) supérieur à ladite deuxième valeur de vitesse (V2), au moins une configuration intermédiaire faiblement hypersustentée (1ext, 1 + F) pour laquelle lesdits becs (13) sont moyennement déployés et inclinés, comme dans lesdites première (1) et deuxième (2) configurations, et les volets (14) sont moins déployés que dans ladite deuxième configuration (2) ; et
- lorsque lesdites ailes (11) présentent ladite configuration intermédiaire (1ext, 1 + F) et que la vitesse de l'aéronef augmente au lieu de baisser et passe un second seuil de vitesse (ARS) supérieur audit premier seuil de vitesse (AES), on procède automatiquement à la rétraction desdits volets (14) pour que lesdites ailes (11) repassent à ladite première configuration (1).

2. Procédé selon la revendication 1,
**caractérisé en ce que** ledit premier seuil de vitesse (AES) est voisin de ladite première valeur prédéterminée de vitesse (V1).

3. Procédé selon la revendication 2,
**caractérisé en ce que** ledit premier seuil de vitesse (AES) est supérieur à ladite première valeur prédéterminée de vitesse (V1).

4. Procédé selon l'une des revendications 1 à 3,
**caractérisé en ce que** ledit second seuil de vitesse (ARS) est supérieur audit premier seuil de vitesse (AES) de quelques kts.

5. Procédé selon l'une des revendications 1 à 4,
**caractérisé en ce que,** dans ladite configuration intermédiaire (1 ext), lesdits volets (14) sont déployés, mais non inclinés.

6. Procédé selon l'une des revendications 1 à 4,
**caractérisé en ce que,** dans ladite configuration intermédiaire (1 + F), lesdits volets (14) sont déployés et inclinés.

7. Procédé selon la revendication 6,
**caractérisé en ce que**, dans ladite configuration intermédiaire (1 +F), lesdits volets (14) sont moins inclinés que dans ladite deuxième configuration (2).

8. Procédé selon l'une des revendications 6 ou 7,
**caractérisé en ce que** ladite configuration intermédiaire (1 + F) correspond à une configuration de décollage faiblement hypersustentée de l'aéronef.

9. Aéronef,
**caractérisé en ce qu'**il met en oeuvre le procédé spécifié sous l'une des revendications 1 à 8.

## Claims

1. A method for piloting an aircraft (10) moving on an approach level (20) while losing speed before beginning the final descent (21) to a runway (22), the wings (11) of said aircraft (10) being provided with leading-edge high-lift slats (13) and trailing-edge high-lift flaps (14), said slats and flaps being controllable by a control lever (15) to confer notably on said wings:
- before said aircraft (10) begins said approach level (20), a smooth configuration (0), without high lift, for which said slats and said flaps are retracted;
- when said aircraft (10) begins said approach level (20) and when its speed (Vc) falls below a first predetermined value (V1), at least one first configuration (1), with very slight high lift, for which said slats (13) are averagely extended and inclined, whereas said flaps (14) remain retracted; and
- when said aircraft (10) follows said approach level (20) and when its speed falls below a second predetermined value (V2) less than said first value (V1), a second configuration (2), with average high lift, for which said slats (13) are averagely extended and inclined, as in said first configuration (1), and said flaps (14) are averagely extended and inclined,
**characterized in that:**
- there is automatically conferred on said wings (11) of the aircraft (10), when said control lever (15) is in a position corresponding to said first configuration (1) and said aircraft crosses a first speed threshold (AES) greater than said second speed value (V2), at least one intermediate configuration with little high lift (1ext, 1+F) for which said slats (13) are averagely extended and inclined, as in said first (1) and second (2) configurations, and the flaps (14) are less extended than in said second configuration (2) ; and
- when said wings (11) present said intermediate configuration (1ext, 1+F) and the speed of the aircraft increases instead of dropping and crosses a second speed threshold (ARS) greater than said first speed threshold (AES), said flaps (14) are automatically retracted for said wings (11) to return to said first configuration (1).

2. The method as claimed in claim 1, **characterized in that** said first speed threshold (AES) is close to said first predetermined speed value (V1).

3. The method as claimed in claim 2, **characterized in that** said first speed threshold (AES) is greater than said first predetermined speed value (V1).

4. The method as claimed in one of claims 1 to 3, **characterized in that** said second speed threshold (ARS) is greater than said first speed threshold (AES) by a few kts.

5. The method as claimed in one of claims 1 to 4, **characterized in that,** in said intermediate configuration (lext), said flaps (14) are extended, but not inclined.

6. The method as claimed in one of claims 1 to 4, **characterized in that,** in said intermediate configuration (1+F), said flaps (14) are extended and inclined.

7. The method as claimed in claim 6,
**characterized in that,** in said intermediate configuration (1+F), said flaps (14) are less inclined than in said second configuration (2).

8. The method as claimed in either of claims 6 and 7,
**characterized in that** said intermediate configuration (1+F) corresponds to a take-off configuration with slight high lift of the aircraft.

9. An aircraft,
**characterized in that** it implements the method specified under one of claims 1 to 8.

## Patentansprüche

1. Verfahren zur Steuerung eines Flugzeugs (10), das sich auf einer Anflugstrecke (20) vor dem Erreichen der End-Sinkphase (21) in Richtung auf eine Landebahn (22) an Geschwindigkeit verlierend bewegt, wobei die Flügel (11) des Flugzeugs (10) mit auftriebserhöhenden Nasenklappen (13) der Flügelvorderkante und mit auftriebserhöhenden Hinterkantenklappen (14) der Flügelhinterkante ausgestattet sind und wobei die Nasenklappen und die Hinterkantenklappen über einen Steuerknüppel (15) ansteuerbar sind, um insbesondere den Flügeln:
- bevor das Flugzeug (10) die Anflugstrecke (20) erreicht, eine glatte, nicht auftriebserhöhende Konfiguration (0) zu verleihen, bei welcher die Nasenklappen und die Hinterkantenklappen eingefahren sind,
- wenn das Flugzeug (10) die Anflugstrecke (20) erreicht und wenn seine Geschwindigkeit (Vc) unter einen ersten vorgegebenen Wert (V1) abfällt, mindestens eine erste, geringfügig auftriebserhöhende Konfiguration (1) zu verleihen, bei welcher die Nasenklappen (13) mittelmäßig ausgefahren und schräggestellt sind, während die Hinterkantenklappen (14) eingefahren bleiben und
- wenn das Flugzeug (10) der Anflugstrecke (20) folgt und wenn seine Geschwindigkeit unter einen zweiten vorgegebenen Wert (V2) abfällt, der geringer als der erste Wert (V1) ist, eine zweite, mittelmäßig auftriebserhöhende Konfiguration (2) zu verleihen, bei welcher die Nasenklappen (13) wie bei der ersten Konfiguration (1) mittelmäßig ausgefahren und schräggestellt sind und bei welcher die Hinterkantenklappen (14) mittelmäßig ausgefahren und schräggestellt sind,
**dadurch gekennzeichnet, dass:**
- wenn der Steuerknüppel (15) in einer der ersten Konfiguration (1) entsprechenden Stellung ist, und wenn das Flugzeug eine erste Geschwindigkeitsschwelle (AES) überschreitet, die über dem zweiten Geschwindigkeitswert (V2) liegt, den Flügeln (11) des Flugzeugs (10) automatisch mindestens eine dazwischenliegende, geringfügig auftriebserhöhende Konfiguration (1 ext, 1 + F) verliehen wird, bei welcher die Nasenklappen (13) wie bei der ersten (1) und zweiten (2) Konfiguration mittelmäßig ausgefahren und schräggestellt sind und bei welcher die Hinterkantenklappen (14) weniger ausgefahren sind, als bei der zweiten Konfiguration (2) und
- wenn die Flügel (11) die dazwischenliegende Konfiguration (1 ext, 1 + F) aufweisen und wenn die Geschwindigkeit des Flugzeugs ansteigt, anstatt zu sinken und eine zweite Geschwindigkeitsschwelle (ARS), die über der ersten Geschwindigkeitsschwelle (AES) liegt, überschreitet, automatisch das Einfahren der Hinterkantenklappen (14) erfolgt, damit die Flügel (11) wieder die erste Konfiguration (1) einnehmen.

2. Verfahren nach Anspruch 1,
**dadurch gekennzeichnet, dass** die erste Geschwindigkeitsschwelle (AES) nahe dem ersten vorgegebenen Geschwindigkeitswert (V1) liegt.

3. Verfahren nach Anspruch 2,
**dadurch gekennzeichnet, dass** die erste Geschwindigkeitsschwelle (AES) über dem ersten vorgegebenen Geschwindigkeitswert (V1) liegt.

4. Verfahren nach einem der Ansprüche 1 bis 3,
**dadurch gekennzeichnet, dass** die zweite Geschwindigkeitsschwelle (ARS) um einige kts über der ersten Geschwindigkeitsschwelle (AES) liegt.

5. Verfahren nach einem der Ansprüche 1 bis 4,
**dadurch gekennzeichnet, dass** bei der dazwischenliegenden Konfiguration (1 ext) die Hinterkantenklappen (14) ausgefahren, aber nicht schräggestellt sind.

6. Verfahren nach einem der Ansprüche 1 bis 4,
**dadurch gekennzeichnet, dass** bei der dazwischenliegenden Konfiguration (1 + F) die Hinterkantenklappen (14) ausgefahren und schräggestellt sind.

7. Verfahren nach Anspruch 6,
**dadurch gekennzeichnet, dass** bei der dazwischenliegenden Konfiguration (1 + F) die Hinterkantenklappen (14) weniger schräggestellt sind, als bei der zweiten Konfiguration (2).

8. Verfahren nach Anspruch 6 oder 7,
**dadurch gekennzeichnet, dass** die dazwischenliegende Konfiguration (1 + F) einer geringfügig auftriebserhöhenden Start-Konfiguration des Flugzeugs entspricht.

9. Flugzeug,
**dadurch gekennzeichnet, dass** es das unter einem der Ansprüche 1 bis 8 spezifizierte Verfahren ausführt.
